# EUROPÄISCHE PATENTSCHRIFT

(11) **EP 4 021 746 B1**
(45) Veröffentlichungstag und Bekanntmachung des Hinweises auf die Patenterteilung: **22.10.2025**
(21) Anmeldenummer: 20750592.6
(22) Anmeldetag: 23.07.2020
(51) Int. Cl.: B60K 1/00, B60K 1/02

(54) **ANTRIEB UND VERFAHREN ZUM BETREIBEN EINES ANTRIEBS**
DRIVE AND METHOD FOR OPERATING A DRIVE
ENTRAÎNEMENT ET PROCÉDÉ D'ACTIONNEMENT D'UN ENTRAÎNEMENT

(30) Priorität: 27.08.2019 DE 102019006043
(43) Veröffentlichungstag der Anmeldung: 06.07.2022
(73) Patentinhaber: SEW-EURODRIVE GmbH & Co. KG, 76646 Bruchsal (DE)
(72) Erfinder: SCHWESINGER, Klaus, 76646 Bruchsal (DE); SCHNEIDER, Matthias, 76646 Bruchsal (DE)
(86) Internationale Anmeldenummer: PCT/EP2020/025344
(87) Internationale Veröffentlichungsnummer: WO 2021/037390

(56) Entgegenhaltungen:
- CN-A- 106 560 336
- DE-A1- 10 318 696
- DE-A1- 10 333 931
- DE-T2- 69 516 129
- DE-T2- 69 835 174
- US-A1- 2005 119 083
- US-A1- 2012 157 255

## Beschreibung

Die Erfindung betrifft einen Antrieb und Verfahren zum Betreiben eines Antriebs.

Es ist allgemein bekannt, dass ein Getriebe eine Übersetzungszahl aufweist. Beispielsweise weist ein Planetengetriebe eine hohe Übersetzungszahl auf.

Aus der DE 10 2019 114 810 A1 ist eine Hybridgetriebe-Hochspannungsverbindung bekannt.

Aus der DE 103 18 696 A1 ist ein Antriebsstrang mit variabler Eingangs- und konstanter Ausgangsdrehzahl bekannt.

Aus der DE 695 16 129 T2 ist ein Hybridfahrzeug bekannt.

Aus der DE 103 33 931 A1 ist eine Regelstrategie für elektromechanisch leistungsverzweigende Hybridantriebe bekannt.

Aus der DE 698 35 174 T2 ist ein Leistungsübertragungssystem für ein Hybridfahrzeug bekannt.

Aus der DE 103 18 696 A1 ist als nächstliegender Stand der Technik ein Antriebsstrang mit variabler Eingangs- und konstanter Ausgangsdrehzahl bekannt.

Aus der DE 695 16 129 T2 ist ein Hybridfahrzeug bekannt.

Aus der DE 103 33 931 A1 ist eine Regelstrategie für elektromechanische leistungsverzweigende Hybridantriebe bekannt.

Aus der DE 698 35 174 T2 ist ein Leistungsübertragungssystem für ein Hybridfahrzeug bekannt.

Aus der US 2012/157255 A1 ist ein integrierter Leistungsstrang bekannt.

Aus der US 2005/119083 A1 ist ein Hybridsystem mit einer steuerbaren Geschwindigkeits.

Aus der CN 106 560 336 A ist ein elektromechanisches Antriebssystem bekannt.

Der Erfindung liegt daher die Aufgabe zugrunde, einen Antrieb weiterzubilden, wobei die Übersetzungszahl steuerbar ist.

Erfindungsgemäß wird die Aufgabe bei dem Antrieb nach den im Anspruch und bei dem Verfahren nach den in Anspruch 12 oder 14 angegebenen Merkmalen gelöst.

Wichtige Merkmale der Erfindung bei dem Antrieb sind, dass der Antrieb zur Leistungsübertragung von einer eintreibenden Welle, insbesondere Planetenträger, zu einer abtreibenden Welle vorgesehen ist,

wobei ein Teil der zu übertragenden Leistung von der eintreibenden Welle einem generatorisch betriebenen, ersten Elektromotor zugeführt und in elektrische Leistung umgewandelt wird, die zumindest teilweise einem motorisch betriebenen, zweiten Elektromotor zugeführt wird, dessen mechanische Leistung der abtreibenden Welle zugeführt wird,
wobei der erste Elektromotor einen wechselspannungsseitigen Anschluss eines ersten Wechselrichters speist, dessen gleichspannungsseitiger Anschluss einen gleichspannungsseitigen Anschluss eines zweiten Wechselrichters speist, dessen wechselspannungsseitiger Anschluss den zweiten Elektromotor speist,
insbesondere wobei der erste Elektromotor eine elektromagnetisch betätigbare Haltebremse aufweist, deren Aktivierung den Teil verschwindend klein macht und deren Deaktivierung den Teil durch die Wechselrichter steuerbar macht,
wobei der restliche Anteil der zu übertragenden Leistung von der eintreibenden Welle über ein mechanisches Getriebe, insbesondere Planetengetriebe, zur abtreibenden Welle übertragen wird.

Von Vorteil ist, dass bei geschlossener Haltebremse keine Leistung über den elektrischen Pfad geleitet wird. Bei geöffneter Haltebremse jedoch ist mittels entsprechender Ansteuerung der Wechselrichter ein Regeln der über den elektrischen Pfad geleiteten Leistung ermöglicht. Insbesondere ist dabei ein Gesamtübersetzungsverhältnis des Antriebs steuerbar, insbesondere zwischen Null und einem wert, der größer ist als das durch den rein mechanischen Pfad, insbesondere also über das Getriebe, erreichbare Übersetzungsverhältnis.

Wichtige Merkmale der Erfindung bei dem Antrieb sind, dass der Antrieb aufweist:
- einen drehbar gelagerten Planetenträger, insbesondere der mit einer Antriebswelle drehfest verbunden ist,
- Planetenräder, die auf mit dem Planetenträger verbundenen Bolzen drehbar gelagert sind,
- ein Hohlrad, das eine Innenverzahnung und eine Außenverzahnung aufweist,
- ein drehbar gelagertes Sonnenrad und
- ein erstes Zahnrad, welches im Eingriff ist mit der Außenverzahnung des Hohlrades,

wobei das erste Zahnrad drehfest verbunden ist mit der Rotorwelle eines ersten Elektromotors, insbesondere Synchronmotors, insbesondere eines als Drehstrommotor ausgeführten Synchronmotors,
wobei der Antrieb ein zweites Zahnrad aufweist, welches mit einem Verzahnungsteil, insbesondere mit einem dritten Zahnrad, im Eingriff ist,
wobei das zweite Zahnrad drehfest verbunden ist mit der Rotorwelle eines zweiten Elektromotors, insbesondere Synchronmotors, insbesondere eines als Drehstrommotor ausgeführten Synchronmotors,
wobei das Verzahnungsteil mit dem Sonnenrad drehfest verbunden ist.

Von Vorteil ist dabei, dass ein mechanischer und ein elektrischer Leistungsübertragungspfad parallel ausgeführt sind. Denn ein Teil der Leistung wird vom Hohlrad an den ersten Elektromotor geleitet, der generatorisch betrieben wird. Die somit bereit gestellte elektrische Leistung wird über den zweiten Elektromotor der abtreibenden Welle des Antriebs zugeführt. Somit ist ein durch das Planetengetriebe mechanisch übertragener Leistungspfad einem mittels der Wechselrichter regelbaren elektrischen Leistungspfad parallelgeschaltet. Auf diese Weise ist also der Leistungsanteil, welcher über den elektrischen Pfad geleitet wird auch zum Steuern oder Regeln eines Übersetzungsverhältnisses, also des Quotienten aus der Drehzahl der abtreibenden Welle und der Drehzahl des Planetenträgers, verwendbar. Wenn nur die durch den mechanischen Pfad, also das Planetengetriebe, erzeugbare konstante Übersetzungsverhältnis gewünscht ist, ist durch Aktivieren der Bremse des ersten Elektromotors und durch Deaktivieren, insbesondere also Aktivieren des stromlosen Zustands, des zweiten Elektromotors, der Antrieb rein mechanisch, insbesondere wie ein Planetengetriebe mit festem Hohlrad, betreibbar. Wenn jedoch eine andere Übersetzungszahl gewünscht ist, ist durch Lüften der Bremse des ersten Elektromotors dieser erste Elektromotor generatorisch im Regelbetrieb betreibbar und die erzeugte generatorisch erzeugte Leistung über den zweiten Elektromotor im motorischen Betrieb geregelt der abtreibenden Welle zuführbar. Statt eines bestimmten Übersetzungsverhältnisses ist aber auch ein zeitabhängiger Verlauf, also eine zeitliche Abfolge von unterschiedlichen Übersetzungsverhältnissen, vorgebbar.

Bei einer vorteilhaften Ausgestaltung ist der erste Elektromotor aus dem wechselspannungsseitigen Anschluss eines ersten Wechselrichters gespeist, dessen gleichspannungsseitiger Anschluss elektrisch, insbesondere parallel, verbunden ist mit dem gleichspannungsseitigen Anschluss eines zweiten Wechselrichters, dessen wechselspannungsseitiger Anschluss den zweiten Elektromotor speist. Von Vorteil ist dabei, dass die generatorisch aufzunehmende Leistung steuerbar ist, insbesondere indem die Drehzahl der eintreibenden Welle, insbesondere des Planetenträgers, auf einen Sollwert hingesteuert wird und das zugehörige Drehmoment gemäß der im elektrischen Pfad durchzuleitenden Leistung bestimmt ist. Diese Leistung wird der abtreibenden Welle zugeführt, indem ein derartiges Drehmoment zugeführt wird, dass die Drehzahl der abtreibenden Welle auf den durch das gewünschte Gesamtübersetzungsverhältnis des Antriebs gebracht wird. Alternativ ist dies aber auch über einen Spannungsregler ausführbar.

Bei einer vorteilhaften Ausgestaltung werden die Ansteuersignale für den ersten Wechselrichter von einer ersten Signalelektronik erzeugt. Von Vorteil ist dabei, dass der erste Wechselrichter den generatorischen geregelten Betrieb des ersten Motors bestimmt.

Bei einer vorteilhaften Ausgestaltung werden die Ansteuersignale für den zweiten Wechselrichter von einer zweiten Signalelektronik erzeugt. Von Vorteil ist dabei, dass der zweite Wechselrichter den generatorischen geregelten Betrieb des ersten Motors bestimmt. Wenn zwischen erstem und zweitem Wechselrichter ein Energiespeicher zwischengeordnet ist, müssen die generatorische und motorische Leistung nicht gleich sein, sondern dürfen voneinander abweichen. Somit bewirken Regelabweichungen keinen Schwingzustand des Antriebs. Die Regelgüte ist also verbessert.

Bei einer vorteilhaften Ausgestaltung weist die erste Signalelektronik einen Drehzahlregler, insbesondere einen ersten linearen Regler, insbesondere P-Regler oder Pl-Regler, auf, dessen Stellgröße ein insbesondere generatorisches Drehmoment des ersten Elektromotors ist. Von Vorteil ist dabei, dass eine einfache Realisierung ausführbar ist.

Bei einer vorteilhaften Ausgestaltung weist die zweite Signalelektronik einen zweiten linearen Regler auf, dessen Stellgröße ein insbesondere motorisches Drehmoment des zweiten Elektromotors ist. Von Vorteil ist dabei, dass eine einfache Realisierung ausführbar ist.

Bei einer vorteilhaften Ausgestaltung ist mit der ersten Signalelektronik ein erster Sensor zur Erfassung der Drehzahl des ersten Zahnrads verbunden, insbesondere und ein Sensor zur Erfassung der am gleichspannungsseitigen Anschluss des ersten Wechselrichters anliegenden Spannung, und/oder dass mit der zweiten Signalelektronik ein zweiter Sensor zur Erfassung der Drehzahl des zweiten Zahnrads verbunden ist und ein Sensor zur Erfassung der am gleichspannungsseitigen Anschluss des zweiten Wechselrichters anliegenden Spannung. Von Vorteil ist dabei, dass die Motoren als Synchronmotoren mit jeweils Drehzahlsensor ausführbar sind.

Bei einer vorteilhaften Ausgestaltung ist mit der ersten Signalelektronik ein erster Sensor zur Erfassung des Ausgangsstroms am wechselspannungsseitigen Anschluss des ersten Wechselrichters verbunden
und/oder dass mit der zweiten Signalelektronik ein zweiter Sensor zur Erfassung am wechselspannungsseitigen Anschluss des Ausgangsstroms des zweiten Wechselrichters verbunden ist. Von Vorteil ist dabei, dass die Motorströme erfasst werden.

Bei einer vorteilhaften Ausgestaltung weist mit der ersten Signalelektronik ein zur Erfassung der am gleichspannungsseitigen Anschluss des ersten oder zweiten Wechselrichters anliegenden Spannung. Von Vorteil ist dabei, dass ein pulsweitenmodulierter Betrieb der steuerbaren Halbleiterschalter der Wechselrichter ausführbar ist, wobei die Pulsweite abhängig von der dem jeweiligen Wechselrichter zur Verfügung stehenden Gleichspannung bestimmbar ist. Somit ist bei schwankender Zwischenkreisspannung eine wohldefinierte Wechselspannung am wechselspannungsseitigen Anschluss des zweiten Wechselrichters erzeugbar.

Bei einer vorteilhaften Ausgestaltung ist ein Energiespeicher elektrisch parallel geschaltet zu den gleichspannungsseitigen Anschlüssen des ersten und des zweiten Wechselrichters. Von Vorteil ist dabei, dass durch Regelabweichungen bewirkte Leistungsschwankungen abpufferbar sind. Bei großer Kapazität des Energiespeichers sind sogar unterschiedliche Regelstrategien der beiden Wechselrichter anwendbar. Beispielsweise ist nach dem Starten zunächst ein kleinerer Leistungsfluss durch motorisch der abtreibenden Welle zuführbar als vom ersten Motor zum Energiespeicher. Somit ist die Drehzahl anfänglich langsamer beschleunigbar als bei vollständiger Leistungsdurchleitung zu beschleunigen wäre.

Bei einer vorteilhaften Ausgestaltung weist der Energiespeicher einen Akkumulator und/oder einen Doppelschichtkondensator, insbesondere Ultracap, auf. Von Vorteil ist dabei, dass eine große Pufferenergie vorsehbar ist.

Bei einer vorteilhaften Ausgestaltung ist der erste Elektromotor als Synchronmotor ausgebildet. Von Vorteil ist dabei, dass ein hohes Drehmoment erzeugbar ist und/oder ein effizienter generatorischer Betrieb ausführbar ist.

Bei einer vorteilhaften Ausgestaltung ist der zweite Elektromotor als Synchronmotor ausgebildet. Von Vorteil ist dabei, dass ein hohes Drehmoment erzeugbar ist und/oder ein effizienter motorischer Betrieb ausführbar ist

Wichtige Merkmale bei dem Verfahren zum Betreiben eines Antriebs sind, dass das Drehmoment des ersten Elektromotors, insbesondere der Motorstrom des ersten Elektromotors, insbesondere und die Motorspannung des ersten Elektromotors, derart gestellt wird, dass die Drehzahl n1_ist der Rotorwelle des ersten Elektromotors erfasst und auf einen Sollwert n1_Soll hingeregelt wird, insbesondere mittels des ersten Wechselrichters,
wobei das Drehmoment des zweiten Elektromotors, insbesondere der Motorstrom des zweiten Elektromotors, insbesondere und die Motorspannung des zweiten Elektromotors, derart gestellt wird, dass die am gleichspannungsseitigen Anschluss des zweiten Wechselrichters anliegende erfasste Spannung U_z_ist auf einen Sollwert U_z_Soll hingeregelt wird, insbesondere mittels des zweiten Wechselrichters.

Von Vorteil ist dabei, dass der generatorisch geregelte Motor die Spannung zu erhöhen und der motorisch geregelte Motor die Spannung zu erniedrigen versucht, wobei ein Begrenzen der Spannung in einfacher Weise zusätzlich ausführbar ist.

Bei einer vorteilhaften Ausgestaltung wird der Sollwert n1_Soll aus der an der Rotorwelle des zweiten Elektromotors erfassten Drehzahl n2_ist bestimmt unter Berücksichtigung eines vorgegebenen Übersetzungsverhältnisses und eines vorgegebenen Aufteilungsverhältnisses, insbesondere wobei das Übersetzungsverhältnis den gewünschten Wert des Quotienten der Drehzahl der Sonnenradwelle und der Drehzahl des Planetenträgers gleicht oder dem gewünschten Wert des Quotienten der Drehzahl der Rotorwelle des zweiten Elektromotors und der Drehzahl des ersten Elektromotors. Von Vorteil ist dabei, dass der Drehzahlsollwert des ersten Motors aus dem Istwert der Drehzahl der abtreibenden Welle bestimmt ist und somit die für den elektrischen Pfad gewünschte Übersetzungszahl berücksichtigt ist.

Wichtige Merkmale bei dem Verfahren zum Betreiben eines Antriebs nach Anspruch 13 sind, dass das Drehmoment des ersten Elektromotors, insbesondere der Motorstrom des ersten Elektromotors, insbesondere und die Motorspannung des ersten Elektromotors, derart gestellt wird, dass die Drehzahl n1_ist der Rotorwelle des ersten Elektromotors erfasst und auf einen Sollwert n1_Soll hingeregelt wird, insbesondere mittels des ersten Wechselrichters,
wobei das Drehmoment des zweiten Elektromotors, insbesondere der Motorstrom des zweiten Elektromotors, insbesondere und die Motorspannung des zweiten Elektromotors, derart gestellt wird, dass die Drehzahl n2_ist der Rotorwelle des zweiten Elektromotors erfasst und auf einen Sollwert n2_Soll hingeregelt wird, insbesondere mittels des zweiten Wechselrichters,
wobei der Sollwert n2_Soll aus der erfassten Drehzahl n1_ist der Rotorwelle des ersten Elektromotors bestimmt wird unter Berücksichtigung einer vorgegebenen Übersetzungszahl und einer vorgegebenen Aufteilung der Übersetzungszahl für den elektrischen und mechanischen Zweig des Antriebs.

Von Vorteil ist dabei, dass der Drehzahlsollwert des ersten Motors sich nach der Istdrehzahl der abtreibenden Welle ausrichtet und beide Motoren drehzahlgeregelt betreibbar sind, also mit gleichartigen Reglerstrukturen betrieben werden.

Bei einer vorteilhaften Ausgestaltung wird die Übersetzungszahl des Antriebs als eine monoton ansteigende Funktion der Zeit vorgegeben und bei Erreichen eines Zielwerts die Haltebremse des ersten Motors aktiviert, insbesondere fällt die Haltebremse also ein,
wobei die Übersetzungszahl des Antriebs bei fixiertem Hohlrad dem Zielwert gleicht. Von Vorteil ist dabei, dass zum Starten des Antriebs das die Bremse gelüftet ist und das Hohlrad somit drehbar ist. außerdem wird beim Starten nicht nur die Drehzahl der Abtriebswelle erhöht, sondern auch die Übersetzungszahl des Antriebs von einem niedrigen Wert, beispielsweise Null, bis zu dem Zielwert, welcher der Übersetzungszahl des rein mechanischen Pfads, insbesondere also des Getriebes, gleicht.

Die Erfindung wird nun anhand einer schematischen Abbildung näher erläutert:

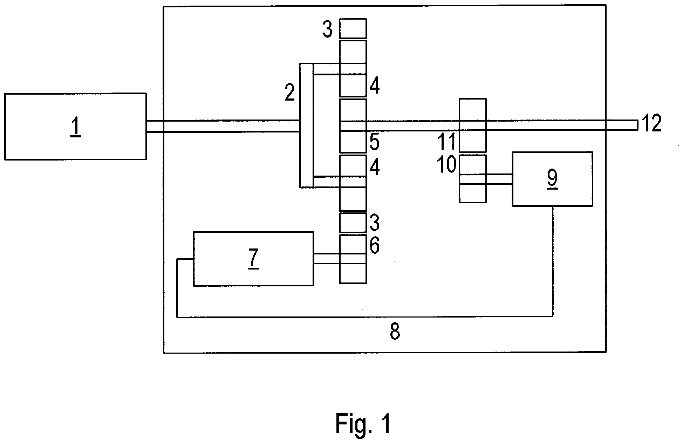

In der Figur 1 ist ein erfindungsgemäßer Antrieb schematisch dargestellt.

Wie in Figur 1 gezeigt, treibt eine Drehmomentquelle 1, insbesondere Elektromotor, einen drehbar gelagerten Planetenträger 2 des Antriebs an.

Der Planetenträger 2 sind parallel zur Drehachse des Planetenträgers 2 ausgerichtete Bolzen verbunden, auf denen drehbar gelagert, insbesondere über Nadellager oder andere Wälzlager, Planetenräder 4 sind.

Die in Umfangsrichtung vorzugsweise voneinander gleichmäßig beabstandeten Planetenräder 4 stehen einerseits mit einem zentral angeordneten Sonnenrad 5 im Eingriff und andererseits mit einem drehbar gelagerten Hohlrad 3, dass die Planetenräder 4 radial umgibt.

Das Hohlrad 3 weist nicht nur eine Innenverzahnung auf, die mit der Außenverzahnung der Planetenräder 4 im Eingriff ist, wobei die Außenverzahnung der Planetenräder 4 mit der Außenverzahnung des Sonnenrades 5 im Eingriff ist, sondern das Hohlrad 3 weist auch eine Außenverzahnung auf, die mit der Außenverzahnung eines ersten Zahnrades 6 im Eingriff ist.

Dieses erste Zahnrad 6 ist drehbar gelagert und drehfest verbunden mit der Rotorwelle eines ersten Elektromotors, insbesondere Synchronmotors, der von einem Wechselrichter 7 speisbar ist. Bei generatorischem Betrieb wird also Drehmoment vom Hohlrad 3 auf das erste Zahnrad 6 übertragen und somit abhängig von der Drehzahl des ersten Zahnrades 6 elektrische Leistung vom ersten Elektromotor an den Wechselrichter geleitet.

Der wechselspannungsseitige Anschluss des Wechselrichters 7 ist mit dem Anschluss des Elektromotors verbunden, insbesondere also mit dem Stator des ersten Elektromotors.

Der gleichspannungsseitige Anschluss des Wechselrichters 7 ist mit dem gleichspannungsseitigen Anschluss eines zweiten Wechselrichters 9 verbunden, dessen wechselspannungsseitiger Anschluss mit dem Anschluss eines zweiten Elektromotors, insbesondere Synchronmotor, verbunden ist. Dieser zweite Elektromotor treibt insbesondere direkt ein zweites Zahnrad 10 an, welches mit einem Verzahnungsteil 11, insbesondere dritten Zahnrad, im Eingriff ist, das drehfest verbunden ist mit derjenigen Welle 12, welche drehfest mit dem Sonnenrad 5 verbunden ist, insbesondere also mit der Abtriebswelle des Planetengetriebes. Somit ist also das Sonnenrad 5 drehfest mit dem Verzahnungsteil 11 verbunden.

Die Verbindung der gleichspannungsseitigen Anschlüsse der beiden Wechselrichter (7, 9) ist als Zwischenkreis 8 bezeichenbar, wobei ein oberes Potential dieser Gleichspannung und ein unteres Potential dieser Gleichspannung, also Zwischenkreisspannung vorgesehen ist.

Optional ist ein Energiespeicher an diesem Zwischenkreis 8 hinzufügbar, so dass eine generatorisch erzeugte Energiemenge im Energiespeicher speicherbar, insbesondere als Pufferenergie verwendbar, ist.

Der erste Wechselrichter 7 weist ein Mittel zur Erfassung des Motorstroms, also des Ausgangsstroms zum ersten Elektromotor auf, dessen Rotorwelle mit dem ersten Zahnrad 6 drehfest verbunden ist.

Zum Betreiben des Antriebs wird eine Übersetzungszahl vorgegeben. Um dieses zu erreichen wird der erste Wechselrichter in Drehzahlregelung betrieben. Die erfasste Drehzahl n1_Ist des ersten Zahnrads 6 wird auf einen Sollwert n1_Soll hingeregelt, indem ein Drehmoment M1 gestellt wird. Dabei ist das Drehmoment generatorisch, weist also einen negativen Wert auf.

Der Istwert U_z_Ist der Zwischenkreisspannung wird erfasst und vom zweiten Wechselrichter 9 auf einen Sollwert U_z_Soll hingeregelt, indem ein Drehmoment M2 über den zweiten Motor ans zweite Zahnrad 10 als Stellgröße eingebracht wird.

Der Sollwert U_z_Soll ist möglichst niedrig vorgegeben, beispielsweise 100 Volt.

Die generatorisch zugeführte Leistung versucht, die Zwischenkreisspannung zu erhöhen, welche aber begrenzt wird auf einen Maximalwert U_z_max, beispielsweise auf 650 Volt oder einen Wert zwischen 650 Volt und 800 Volt.

Somit tendiert der erste Wechselrichter 7 zu einer Erhöhung der Zwischenkreisspannung und der zweite Wechselrichter 9 tendiert zu einer Erniedrigung der Zwischenkreisspannung. Im Idealfall bleibt die Zwischenkreisspannung zunächst auf einem mittleren Wert, wobei nach Aktivieren, also Einfallen, der Bremse des ersten Elektromotors die Zwischenkreisspannung einen verschwindend kleinen Wert, insbesondere Null erreicht.

Durch Vorsehen einer Kapazität im Zwischenkreis 8, insbesondere durch Vorsehen eines Energiespeichers im Zwischenkreis 8 beeinflussen Regelschwankungen des ersten Wechselrichters 7 das Regelverhalten des zweiten Wechselrichters weniger und Schwingungsneigung des gesamten Systems wird reduziert.

Der Drehzahlregler des ersten Wechselrichters 7 ist vorzugsweise als linearer Regler, wie P-Regler oder PI-Regler, ausgeführt. Der Regler des zweiten Wechselrichters 9 ist vorzugsweise ebenfalls als linearer Regler, wie P-Regler oder Pl-Regler, ausgeführt.

Somit ist nur eine Drehzahlerfassung am ersten Elektromotor und eine Erfassung der Zwischenkreisspannnung sowie die Erfassung der Ausgangsströme der beiden Wechselrichter (7, 9) an ihrem jeweiligen wechselspannungsseitigen Anschluss notwendig. Zusätzlich ist eine Drehzahlerfassung am zweiten Elektromotor hilfreich, um ein möglichst gut angepasstes Drehfeld zu erzeugen.

Der erste Elektromotor ist vorzugsweise als Drehstrommotor ausgeführt und der zweite Elektromotor ebenfalls.

Der jeweilige Wechselrichter (7, 9) weist eine aus der Zwischenkreisspannung gespeiste Parallelschaltung von drei Reihenschaltungen auf, wobei jede der Reihenschaltungen zwei in Reihe geschaltete steuerbare Halbleiterschalter, insbesondere IGBT oder MOSFET, aufweist. Auf diese Weise ist am wechselspannungsseitigen Anschluss des jeweiligen Wechselrichters jeweils eine Drehspannung zur Verfügung stellbar.

Die Steuerspannungen für die Halbleiterschalter werden von einer Signalelektronik erzeugt, die vorzugsweise aus einem ersten Teil, welcher in einem Gehäuse mit dem ersten Wechselrichter 7 angeordnet ist, und aus einem zweiten Teil zusammengesetzt ist, welcher in einem Gehäuse mit dem zweiten Wechselrichter 9 angeordnet ist. Die beiden Teile sind mittels einer Datenaustauschverbindung verbunden. Der erste Teil enthält den Drehzahlregler und der zweite Teil den Spannungsregler, wobei beide Regler jeweils als Stellgröße ein Drehmoment aufweisen.

Das Sonnenrad 5 ist radial innerhalb der Planetenräder 4 angeordnet, die wiederum radial innerhalb des Hohlrades 3 angeordnet sind.

Bei weiteren erfindungsgemäßen Ausführungsbeispielen wird eine andere Reglerstruktur verwendet. Dabei werden beide Wechselrichter 7 und 9 jeweils in Drehzahlregelung betrieben und eine gewünschte Übersetzung für den elektrischen Zweig vorgegeben. Die am ersten Elektromotor erfasste Drehzahl n1_ist wird auf einen vorgegebenen Solldrehzahlverlauf n1_Soll (t) hin geregelt, indem ein Drehmoment M1 gestellt und somit über den ersten Elektromotor dem ersten Zahnrad 6 zugeleitet wird. Der zweite Wechselrichter erhält als Solldrehzahl n2 einen von der erfassten Drehzahl n1_ist abhängigen Wert und regelt die erfasste Drehzahl n2_ist des Verzahnungsteils 11 auf diese Solldrehzahl n2 hin, indem er ein entsprechendes Drehmoment M2 stellt. Dabei wird die Solldrehzahl vorzugsweise als Summe der mit dem mechanischen Übersetzungsverhältnis multiplizierten, mittels eines Drehzahlsensors erfassten Drehzahl des Planetenträgers 2 und der über den elektrischen Pfad zusätzlich erzeugten Drehzahl bestimmt

Bei weiteren erfindungsgemäßen Ausführungsbeispielen wird anstatt eines konstanten Wertes für Übersetzungszahl, insbesondere also Übersetzungsverhältnis, ein zeitlicher Verlauf der Übersetzungszahl vorgegeben. Insbesondere zum Starten eines Antriebs steigt während der Beschleunigung von der Drehzahl Null ausgehend bis zum Erreichen der Solldrehzahl das Übersetzungsverhältnis von Null auf einen Wert an, der dem rein mechanischen Übersetzungsverhältnis des Planetengetriebes entspricht, also demjenigen Übersetzungsverhältnis, das bei aktivierter Bremse des ersten Motors, also Fixieren des Hohlrades 3, erreicht wird, wenn der zweite Motor deaktiviert ist. Somit wird die Bremse also erst dann aktiviert und somit das Hohlrad 3 erst dann fixiert, wenn das Übersetzungsverhältnis den vom Planetengetriebe rein mechanisch erreichbaren Wert erreicht hat.

### Bezugszeichenliste

1 Drehmomentquelle, insbesondere Elektromotor
2 Planetenträger
3 Hohlrad
4 Planetenrad
5 Sonnenrad
6 erstes Zahnrad
7 Wechselrichter, insbesondere generatorisch betriebener Wechselrichter
8 Zwischenkreis
9 Wechselrichter, insbesondere motorisch betriebener Wechselrichter
10 zweites Zahnrad
11 Verzahnungsteil, insbesondere drittes Zahnrad
12 Welle, insbesondere Abtriebswelle

## Patentansprüche

1. Antrieb,
aufweisend
- einen drehbar gelagerten Planetenträger (2), insbesondere der mit einer Antriebswelle drehfest verbunden ist,
- Planetenräder, die auf mit dem Planetenträger (2) verbundenen Bolzen drehbar gelagert sind,
- ein Hohlrad (3), das eine Innenverzahnung und eine Außenverzahnung aufweist,
- ein drehbar gelagertes Sonnenrad (5) und
- ein erstes Zahnrad (6), welches im Eingriff ist mit der Außenverzahnung des Hohlrades (3),
**dadurch gekennzeichnet, dass**
das erste Zahnrad (6) drehfest verbunden ist mit der Rotorwelle eines ersten Elektromotors, insbesondere Synchronmotors, insbesondere eines als Drehstrommotor ausgeführten Synchronmotors,
wobei der Antrieb ein zweites Zahnrad (10) aufweist, welches mit einem Verzahnungsteil (11), insbesondere mit einem dritten Zahnrad, im Eingriff ist,
wobei das zweite Zahnrad (10) drehfest verbunden ist mit der Rotorwelle eines zweiten Elektromotors, insbesondere Synchronmotors, insbesondere eines als Drehstrommotor ausgeführten Synchronmotors,
wobei das Verzahnungsteil (11) mit dem Sonnenrad (5) drehfest verbunden ist.

2. Antrieb nach Anspruch 1,
**dadurch gekennzeichnet, dass**
der erste Elektromotor aus dem wechselspannungsseitigen Anschluss eines ersten Wechselrichters (7) gespeist ist, dessen gleichspannungsseitiger Anschluss elektrisch, insbesondere parallel, verbunden ist mit dem gleichspannungsseitigen Anschluss eines zweiten Wechselrichters (10), dessen wechselspannungsseitiger Anschluss den zweiten Elektromotor speist.

3. Antrieb nach einem der vorangegangenen Ansprüche,
**dadurch gekennzeichnet, dass**
die Ansteuersignale für den ersten Wechselrichter (7) von einer ersten Signalelektronik erzeugt werden
und dass
die Ansteuersignale für den zweiten Wechselrichter von einer zweiten Signalelektronik erzeugt werden.

4. Antrieb nach einem der vorangegangenen Ansprüche,
**dadurch gekennzeichnet, dass**
die erste Signalelektronik einen Drehzahlregler, insbesondere einen ersten linearen Regler, insbesondere P-Regler oder Pl-Regler, aufweist, dessen Stellgröße ein insbesondere generatorisches Drehmoment des ersten Elektromotors ist.

5. Antrieb nach einem der vorangegangenen Ansprüche,
**dadurch gekennzeichnet, dass**
die zweite Signalelektronik einen zweiten linearen Regler aufweist, dessen Stellgröße ein insbesondere motorisches Drehmoment des zweiten Elektromotors ist.

6. Antrieb nach einem der vorangegangenen Ansprüche,
**dadurch gekennzeichnet, dass**
mit der ersten Signalelektronik ein erster Sensor zur Erfassung der Drehzahl des ersten Zahnrads (6) verbunden ist, insbesondere und ein Sensor zur Erfassung der am gleichspannungsseitigen Anschluss des ersten Wechselrichters (7) anliegenden Spannung,
und/oder dass mit der zweiten Signalelektronik ein zweiter Sensor zur Erfassung der Drehzahl des zweiten Zahnrads (10) verbunden ist und ein Sensor zur Erfassung der am gleichspannugnsseitigen Anschluss des zweiten Wechselrichters (10) anliegenden Spannung.

7. Antrieb nach einem der vorangegangenen Ansprüche,
**dadurch gekennzeichnet, dass**
mit der ersten Signalelektronik ein erster Sensor zur Erfassung des Ausgangsstroms am wechselspannungsseitigen Anschluss des ersten Wechselrichters (7) verbunden ist,
und/oder dass mit der zweiten Signalelektronik ein zweiter Sensor zur Erfassung am wechselspannungsseitigen Anschluss des Ausgangsstroms des zweiten Wechselrichters (10) verbunden ist.

8. Antrieb nach einem der vorangegangenen Ansprüche,
**dadurch gekennzeichnet, dass**
mit der ersten Signalelektronik ein zur Erfassung der am gleichspannugnsseitigen Anschluss des ersten oder zweiten Wechselrichters (7, 10) anliegenden Spannung.

9. Antrieb nach einem der vorangegangenen Ansprüche,
**dadurch gekennzeichnet, dass**
ein Energiespeicher elektrisch parallel geschaltet ist zu den gleichspannungsseitigen Anschlüssen des ersten und des zweiten Wechselrichters (7, 10).

10. Antrieb nach einem der vorangegangenen Ansprüche,
**dadurch gekennzeichnet, dass**
der Energiespeicher einen Akkumulator und/oder einen Doppelschichtkondensator, insbesondere Ultracap, aufweist.

11. Antrieb nach einem der vorangegangenen Ansprüche,
**dadurch gekennzeichnet, dass**
der erste Elektromotor als Synchronmotor ausgebildet ist
und/oder dass
der zweite Elektromotor als Synchronmotor ausgebildet ist.

12. Verfahren zum Betreiben eines Antriebs, insbesondere nach einem der vorangegangenen Ansprüche,
**dadurch gekennzeichnet, dass**
das Drehmoment des ersten Elektromotors, insbesondere der Motorstrom des ersten Elektromotors, insbesondere und die Motorspannung des ersten Elektromotors, derart gestellt wird, dass die Drehzahl n1_ist der Rotorwelle des ersten Elektromotors erfasst und auf einen Sollwert n1_Soll hingeregelt wird, insbesondere mittels des ersten Wechselrichters (7),
wobei das Drehmoment des zweiten Elektromotors, insbesondere der Motorstrom des zweiten Elektromotors, insbesondere und die Motorspannung des zweiten Elektromotors, derart gestellt wird, dass die am gleichspannungsseitigen Anschluss des zweiten Wechselrichters (10) anliegende erfasste Spannung U_z_ist auf einen Sollwert U_z_Soll hingeregelt wird, insbesondere mittels des zweiten Wechselrichters (10).

13. Verfahren nach Anspruch 12
**dadurch gekennzeichnet, dass**
der Sollwert n1_Soll aus der an der Rotorwelle des zweiten Elektromotors erfassten Drehzahl n2_ist bestimmt wird unter Berücksichtigung eines vorgegebenen Übersetzungsverhältnisses und eines vorgegebenen Aufteilungsverhältnisses,
insbesondere wobei das Übersetzungsverhältnis den gewünschten Wert des Quotienten der Drehzahl der Sonnenradwelle und der Drehzahl des Planetenträgers (2) gleicht oder dem gewünschten Wert des Quotienten der Drehzahl der Rotorwelle des zweiten Elektromotors und der Drehzahl des ersten Elektromotors.

14. Verfahren zum Betreiben eines Antriebs, insbesondere nach einem der Ansprüche 1 bis 12,
**dadurch gekennzeichnet, dass**
das Drehmoment des ersten Elektromotors, insbesondere der Motorstrom des ersten Elektromotors, insbesondere und die Motorspannung des ersten Elektromotors, derart gestellt wird, dass die Drehzahl n1_ist der Rotorwelle des ersten Elektromotors erfasst und auf einen Sollwert n1_Soll hingeregelt wird, insbesondere mittels des ersten Wechselrichters (7),
wobei das Drehmoment des zweiten Elektromotors, insbesondere der Motorstrom des zweiten Elektromotors, insbesondere und die Motorspannung des zweiten Elektromotors, derart gestellt wird, dass die Drehzahl n2_ist der Rotorwelle des zweiten Elektromotors erfasst und auf einen Sollwert n2_Soll hingeregelt wird, insbesondere mittels des zweiten Wechselrichters (10),
wobei der Sollwert n2_Soll aus der erfassten Drehzahl n1_ist der Rotorwelle des ersten Elektromotors bestimmt wird unter Berücksichtigung einer vorgegebenen Übersetzungszahl und einer vorgegebenen Aufteilung der Übersetzungszahl für den elektrischen und mechanischen Zweig des Antriebs.

15. Verfahren nach einem der vorangegangenen Ansprüche,
**dadurch gekennzeichnet, dass**
die übersetzungszahl des Antriebs als eine monoton ansteigende Funktion der Zeit vorgegeben wird und bei Erreichen eines Zielwerts die Haltebremse des ersten Motors aktiviert wird, insbesondere also einfällt,
wobei die Übersetzungszahl des Antriebs bei fixiertem Hohlrad (3) dem Zielwert gleicht.

## Claims

1. A drive,
having
- a rotatably mounted pinion cage (2), in particular which is connected non-rotatably to a drive shaft,
- planet gears which are rotatably mounted on bolts connected to the pinion cage (2),
- a ring gear (3) which has internal gearing and external gearing,
- a rotatably mounted sun gear (5) and
- a first gear wheel (6) which meshes with the external gearing of the ring gear (3),
**characterised in that**
the first gear wheel (6) is connected non-rotatably to the rotor shaft of a first electric motor, in particular synchronous motor, in particular of a synchronous motor embodied as a three-phase motor,
with the drive having a second gear wheel (10) which meshes with a toothed part (11), in particular with a third gear wheel,
with the second gear wheel (10) being connected non-rotatably to the rotor shaft of a second electric motor, in particular synchronous motor, in particular of a synchronous motor embodied as a three-phase motor,
with the toothed part (11) being connected non-rotatably to the sun gear (5).

2. A drive according to claim 1,
**characterised in that**
the first electric motor is fed from the AC-voltage-side connector of a first inverter (7), the DC-voltage-side connector of which is connected electrically, in particular in parallel, to the DC-voltage-side connector of a second inverter (10), the AC-voltage-side connector of which feeds the second electric motor.

3. A drive according to one of the preceding claims,
**characterised in that**
the activation signals for the first inverter (7) are generated by first signal electronics
and **in that**
the activation signals for the second inverter are generated by second signal electronics.

4. A drive according to one of the preceding claims,
**characterised in that**
the first signal electronics have a speed controller, in particular a first linear controller, in particular P controller or PI controller, the controlled variable of which is an in particular generator-mode torque of the first electric motor.

5. A drive according to one of the preceding claims,
**characterised in that**
the second signal electronics have a second linear controller, the controlled variable of which is an in particular motor-mode torque of the second electric motor.

6. A drive according to one of the preceding claims,
**characterised in that**
to the first signal electronics there is connected a first sensor for detecting the speed of rotation of the first gear wheel (6), in particular and a sensor for detecting the voltage applied to the DC-voltage-side connector of the first inverter (7),
and/or **in that** to the second signal electronics there is connected a second sensor for detecting the speed of rotation of the second gear wheel (10) and a sensor for detecting the voltage applied to the DC-voltage-side connector of the second inverter (10).

7. A drive according to one of the preceding claims,
**characterised in that**
to the first signal electronics there is connected a first sensor for detecting the output current at the AC-voltage-side connector of the first inverter (7),
and/or **in that** to the second signal electronics there is connected a second sensor for detecting the output current at the AC-voltage-side connector of the second inverter (10).

8. A drive according to one of the preceding claims,
**characterised in that**
to the first signal electronics a for detecting the voltage applied to the DC-voltage-side connector of the first or second inverter (7, 10).

9. A drive according to one of the preceding claims,
**characterised in that**
an energy storage means is electrically connected in parallel to the DC-voltage-side connectors of the first and the second inverter (7, 10).

10. A drive according to one of the preceding claims,
**characterised in that**
the energy storage means has a storage battery and/or a double-layer capacitor, in particular ultracap.

11. A drive according to one of the preceding claims,
**characterised in that**
the first electric motor takes the form of a synchronous motor
and/or **in that**
the second electric motor takes the form of a synchronous motor.

12. A method for operating a drive, in particular according to one of the preceding claims,
**characterised in that**
the torque of the first electric motor, in particular the motor current of the first electric motor, in particular and the motor voltage of the first electric motor, is set such that the speed of rotation n1_actual of the rotor shaft of the first electric motor is detected and controlled to a setpoint value n1_setpoint, in particular by means of the first inverter (7),
with the torque of the second electric motor, in particular the motor current of the second electric motor, in particular and the motor voltage of the second electric motor, being set such that the detected voltage U_z_actual applied to the DC-voltage-side connector of the second inverter (10) is controlled to a setpoint value U_z_setpoint, in particular by means of the second inverter (10).

13. A method according to claim 12,
**characterised in that**
the setpoint value n1_setpoint is determined from the speed of rotation n2_actual detected at the rotor shaft of the second electric motor, taking into account a specified transmission ratio and a specified split ratio,
in particular with the transmission ratio being equal to the desired value of the quotient of the speed of rotation of the sun gear shaft and of the speed of rotation of the pinion cage (2), or to the desired value of the quotient of the speed of rotation of the rotor shaft of the second electric motor and of the speed of rotation of the first electric motor.

14. A method for operating a drive, in particular according to one of claims 1 to 12,
**characterised in that**
the torque of the first electric motor, in particular the motor current of the first electric motor, in particular and the motor voltage of the first electric motor, is set such that the speed of rotation n1_actual of the rotor shaft of the first electric motor is detected and controlled to a setpoint value n1_setpoint, in particular by means of the first inverter (7),
with the torque of the second electric motor, in particular the motor current of the second electric motor, in particular and the motor voltage of the second electric motor, being set such that the speed of rotation n2_actual of the rotor shaft of the second electric motor is detected and controlled to a setpoint value n2_setpoint, in particular by means of the second inverter (10),
with the setpoint value n2_setpoint being determined from the detected speed of rotation n1_actual of the rotor shaft of the first electric motor, taking into account a specified gear ratio number and a specified split of the gear ratio number for the electrical and mechanical branches of the drive.

15. A method according to one of the preceding claims,
**characterised in that**
the gear ratio number of the drive is specified as a monotonically increasing function of the time and when a target value is reached the holding brake of the first motor is activated, in particular is therefore applied,
with the gear ratio number of the drive with ring gear (3) fixed being equal to the target value.

## Revendications

1. Entraînement,
comprenant
- un porte-satellites (2) monté de manière rotative, en particulier relié de manière solidaire en rotation à un arbre d'entraînement,
- des pignons satellites montés rotatifs sur des pivots reliés au porte-satellites (2),
- une roue creuse (3) présentant une denture intérieure et une denture extérieure,
- une roue solaire (5) montée rotative, et
- une première roue dentée (6) qui est en prise avec la denture extérieure de la roue creuse (3),
**caractérisé en ce que**
la première roue dentée (6) est reliée de manière solidaire en rotation à l'arbre de rotor d'un premier moteur électrique, en particulier d'un moteur synchrone, en particulier d'un moteur synchrone réalisé sous la forme d'un moteur triphasé,
l'entraînement présentant une deuxième roue dentée (10) qui est en prise avec une partie denture (11), en particulier avec une troisième roue dentée,
la deuxième roue dentée (10) étant reliée de manière solidaire en rotation à l'arbre de rotor d'un second moteur électrique, en particulier d'un moteur synchrone, en particulier d'un moteur synchrone réalisé sous la forme d'un moteur triphasé,
la partie denture (11) étant reliée de manière solidaire en rotation à la roue solaire (5).

2. Entraînement selon la revendication 1,
**caractérisé en ce que**
le premier moteur électrique est alimenté à partir de la borne située côté tension alternative d'un premier onduleur (7) dont la borne située côté tension continue est connectée électriquement, en particulier en parallèle, à la borne située côté tension continue d'un second onduleur (10) dont la borne située côté tension alternative alimente le second moteur électrique.

3. Entraînement selon l'une quelconque des revendications précédentes,
**caractérisé en ce que**
les signaux de commande destinés au premier onduleur (7) sont générés par une première électronique de signal
et **en ce que**
les signaux de commande destinés au second onduleur sont générés par une seconde électronique de signal.

4. Entraînement selon l'une quelconque des revendications précédentes,
**caractérisé en ce que**
la première électronique de signal présente un régulateur de vitesse, en particulier un premier régulateur linéaire, en particulier un régulateur P ou un régulateur PI, dont la grandeur de réglage est un couple, en particulier générateur, du premier moteur électrique.

5. Entraînement selon l'une quelconque des revendications précédentes,
**caractérisé en ce que**
la seconde électronique de signal présente un second régulateur linéaire dont la grandeur de réglage est un couple, en particulier moteur, du second moteur électrique.

6. Entraînement selon l'une quelconque des revendications précédentes,
**caractérisé en ce que**
en particulier un premier capteur permettant de détecter la vitesse de rotation de la première roue dentée (6) est connecté à la première électronique de signal, ainsi qu'un capteur permettant de détecter la tension appliquée à la borne située côté tension continue du premier onduleur (7),
et/ou un second capteur permettant de détecter la vitesse de rotation de la deuxième roue dentée (10) est relié à la seconde électronique de signal, ainsi qu'un capteur permettant de détecter la tension appliquée à la borne située côté tension continue du second onduleur (10).

7. Entraînement selon l'une quelconque des revendications précédentes,
**caractérisé en ce que**
un premier capteur permettant de détecter l'intensité de sortie au niveau de la borne située côté tension alternative du premier onduleur (7) est connecté à la première électronique de signal,
et/ou un second capteur permettant de détecter l'intensité de sortie du second onduleur (10) au niveau de la borne située côté tension alternative est connecté à la seconde électronique de signal.

8. Entraînement selon l'une quelconque des revendications précédentes,
**caractérisé en ce que**
la première électronique de signal présente un capteur permettant de détecter la tension appliquée à la borne située côté tension continue du premier ou du second onduleur (7, 10).

9. Entraînement selon l'une quelconque des revendications précédentes,
**caractérisé en ce que**
un accumulateur d'énergie est connecté électriquement en parallèle aux bornes situées côté tension continue des premier et second onduleurs (7, 10).

10. Entraînement selon l'une quelconque des revendications précédentes,
**caractérisé en ce que**
l'accumulateur d'énergie présente un accumulateur et/ou un condensateur à double couche, en particulier un ultracondensateur Ultracap.

11. Entraînement selon l'une quelconque des revendications précédentes,
**caractérisé en ce que**
le premier moteur électrique est réalisé sous la forme d'un moteur synchrone et/ou **en ce que**
le second moteur électrique est réalisé sous la forme d'un moteur synchrone

12. Procédé de fonctionnement d'un entrainement, en particulier selon l'une quelconque des revendications précédentes,
**caractérisé en ce que**
en particulier le couple du premier moteur électrique, en particulier l'intensité de moteur du premier moteur électrique, ainsi que la tension de moteur du premier moteur électrique, est ajusté(e) de telle manière que la vitesse de rotation n1_ist de l'arbre de rotor du premier moteur électrique est détectée et est régulée à une valeur de consigne n1_Soll, en particulier au moyen du premier onduleur (7),
en particulier le couple du second moteur électrique, en particulier l'intensité de moteur du second moteur électrique, ainsi que la tension de moteur du second moteur électrique, étant ajusté(e) de telle manière que la tension U_z_ist détectée appliquée à la borne située côté tension continue du second onduleur (10) est régulée à une valeur de consigne U_z_Soll, en particulier au moyen du second onduleur (10).

13. Procédé selon la revendication 12,
**caractérisé en ce que**
la valeur de consigne n1_Soll est déterminée à partir de la vitesse de rotation n2_ist détectée au niveau de l'arbre de rotor du second moteur électrique, en tenant compte d'un rapport de démultiplication prédéfini et d'un rapport de répartition prédéfini,
le rapport de démultiplication étant en particulier égal à la valeur souhaitée du quotient de la vitesse de rotation de l'arbre de roue solaire et de la vitesse de rotation du porte-satellites (2), ou étant égal à la valeur souhaitée du quotient de la vitesse de rotation de l'arbre de rotor du second moteur électrique et de la vitesse de rotation du premier moteur électrique.

14. Procédé de fonctionnement d'un entraînement, en particulier selon l'une quelconque des revendications 1 à 12,
**caractérisé en ce que**
le couple du premier moteur électrique, en particulier l'intensité de moteur du premier moteur électrique, ainsi que la tension de moteur du premier moteur électrique, est ajusté(e) de telle manière que la vitesse de rotation n1_ist de l'arbre de rotor du premier moteur électrique est détectée et est régulée à une valeur de consigne n1_Soll, en particulier au moyen du premier onduleur (7),
en particulier le couple du second moteur électrique, en particulier l'intensité de moteur du second moteur électrique, ainsi que la tension de moteur du second moteur électrique, étant ajusté(e) de telle manière que la vitesse de rotation n2_ist de l'arbre de rotor du second moteur électrique est détectée et est régulée à une valeur de consigne n2_Soll, en particulier au moyen du second onduleur (10),
la valeur de consigne n2_Soll étant déterminée à partir de la vitesse de rotation n1_ist détectée de l'arbre de rotor du premier moteur électrique, en tenant compte d'une valeur de démultiplication prédéfinie et d'une répartition prédéfinie de la valeur de démultiplication pour la branche électrique et mécanique de l'entraînement.

15. Procédé selon l'une quelconque des revendications précédentes,
**caractérisé en ce que**
la valeur de démultiplication de l'entraînement est prédéfinie sous la forme d'une fonction monotone croissante du temps et le frein de stationnement du premier moteur est activé, en particulier appliqué, lorsqu'une valeur cible est atteinte,
la valeur de démultiplication de l'entraînement étant égale à la valeur cible lorsque la roue creuse (3) est immobilisée.
